(19) Europäisches Patentamt
European Patent Office
Office européen des brevets

(11) **EP 1 871 133 B1**

(12) **EUROPEAN PATENT SPECIFICATION**

(45) Date of publication and mention
of the grant of the patent:
**20.04.2011 Bulletin 2011/16**

(51) Int Cl.:
*H04W 4/06* (2009.01)    *H04B 17/00* (2006.01)
*H04W 36/36* (2009.01)    *H04W 36/30* (2009.01)

(21) Application number: **06775484.6**

(22) Date of filing: **24.08.2006**

(86) International application number:
**PCT/CN2006/002166**

(87) International publication number:
**WO 2007/022726 (01.03.2007 Gazette 2007/09)**

(54) **MEASUREMENT METHOD, METHOD FOR DETERMINING MEASUREMENT CAPABILITY REQUIREMENT AND SELECTING SERVICE CELL AND TERMINAL THEREFORE**

MESSVERFAHREN, VERFAHREN ZUR BESTIMMUNG VON MESSKAPAZITÄTSANFORDERUNGEN UND AUSWAHL VON DIENSTZELLEN UND ENDGERÄT DAFÜR

PROCEDE DE MESURE, PROCEDE DE DETERMINATION LES BESOINS EN CAPACITE DE MESURE ET CELLULE DE SELECTION DE SERVICES ET TERMINAL A CET EFFET

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.08.2005   CN 200510092909**
**28.10.2005   CN 200510116765**

(43) Date of publication of application:
**26.12.2007 Bulletin 2007/52**

(73) Proprietor: **Huawei Technologies Co., Ltd.**
**Longgang District, Shenzhen**
**Guangdong 518129 (CN)**

(72) Inventor: **YIN, Liyan**
**Guangdong 518129 (CN)**

(74) Representative: **Kreuz, Georg Maria et al**
**Huawei Technologies**
**Riesstrasse 25**
**80992 München (DE)**

(56) References cited:
**EP-A- 1 478 198        CN-A- 1 274 495**
**KR-A- 20040 089 406    KR-A- 20040 107 813**

• "Universal Mobile Telecommunications System (UMTS); Radio Resource Control (RRC) protocol specification (3GPP TS 25.331 version 6.4.0 Release 6); ETSI TS 125 331" ETSI STANDARDS, EUROPEAN TELECOMMUNICATIONS STANDARDS INSTITUTE, SOPHIA-ANTIPO, FR, vol. 3-R2, no. V640, December 2004 (2004-12), XP014027672 ISSN: 0000-0001

**Description**

**Field of the Invention**

The present invention relates to inter-frequency/inter-RAT measurement technology for user equipment (UE) in the 3rd generation (3G) mobile communications system. In particular, it relates to a method for measurement, a method for determining required measurement performance and a method for selecting the serving cell, as well as the user equipment.

**Background of the Invention**

The universal mobile telecommunications system (UMTS) is a 3G mobile communications system that adopts the air interface technology of wideband code division multiple access (WCDMA). It evolves in the 3rd Generation Partnership Project (3GPP), the organization for standardization of global WCDMA and global system for mobile communications (GSM).

According to 3GPP UMTS standards, a UE may be in either of two modes, idle and RRC connected, depending on whether a radio resource control (RRC) connection is established. A UE that establishes no connection to the UMTS universal terrestrial radio access network (UTRAN) is in an idle mode. Idle UEs can only be identified by non-access stratum (NAS) identifiers, for example, the international mobile subscriber identity (IMSI). A UE that has established an RRC connection to the UTRAN is in an RRC connected mode. An RRC connected UE is allocated a radio network temporary identity (RNTI), which identifies the UE over the common transport channel (CCH).

The RRC connected UE may have different states, depending on a stratum of the RRC connection and a transport channel type allowed to the UE. UEs in CELL_PCH, CELL_FACH and CELL_DCH states can be differentiated at the cell stratum. UEs in an URA_PCH state can be differentiated at the UTRAN register area (URA) stratum. A UE in a CELL_DCH state is allocated a dedicated physical channel, and can use the dedicated channel, the shared channel, or their combination. A UE in a CELL_FACH state monitors a common transport channel, namely forward access channel (FACH), on the downlink and is allocated a default common channel, reverse access channel (RACH), on the uplink. UEs in CELL_PCH and URA_PCH states monitor a page channel (PCH) by using discontinuous reception (DRX) through a related page indicator channel (PICH). UEs in these two states are inactive on the uplink.

According to 3GPP UMTS standards, when a UE is in a different mode and a different state, the UE measures the inter-frequency/inter-RAT cell according to the system information received and the receiving quality in the cell where the UE resides for cell reselection and handover processing. For a UE in idle, the CELL_PCH, the URA_PCH or the CELL_FACH state, inter-frequency/inter-RAT measurement is triggered by the system information received and the receiving quality of the current cell. For a UE in a CELL_DCH state, inter-frequency/inter-RAT measurement is triggered by the system measurement control information sent by the system. Normally, a UE that is not equipped with dual receivers is incapable of receiving and decoding signals in two frequencies. Thus, during the progress of inter-frequency/inter-RAT measurement, the UE will interrupt the reception of signals in the current cell.

To facilitate the utilization of mobile network resources, the 3G mobile communications system introduces the concepts of multicast and broadcast. Multicast and broadcast are a technology that transmits the same data from a data source to multiple destinations. For that, the 3GPP puts forward the multimedia broadcast/multicast service (MBMS). The MBMS is a point-to-multipoint service that transmits the same data from a data source to multiple users in a mobile communications network. The purpose is to realize the sharing of network resources and improve the utilization of network resources, especially the utilization of air interface resources.

MBMS data may be transmitted between the UEs and the UTRAN in two modes, namely, point to point (PTP) and point to multipoint (PTM). PTP transmission is applicable to multicast. In this mode, an RRC connected UE receives control information over the dedicated control channel (DCCH) and receives data information over the dedicated traffic channel (DTCH). PTM transmission is applicable to broadcast or multicast. In this mode, a UE receives data information over the MBMS point-to-multipoint traffic channel (MTCH) and receives control information over the MBMS point-to-multipoint control channel (MCCH).

The UE monitors three types of cells:

active set cell: UE information is transmitted in these cells; the UE only measures active set cells that are included in a cell list.
monitor set cell: cells that are not included in the active set but included in the cell list.
detection set cell: cells that are neither included in the cell list nor included in the active set but can be detected by the UE.

According to 3GPP UMTS standards, time division duplex (TDD) UEs include 1.28Mcps TDD UEs and 3.84Mcps TDD UEs.

In the CELL_FACH state, a 3.84Mcps TDD UE can monitor most cells:

32 intra-frequency cells (including the current serving cell of the UE);
32 inter-frequency cells, including TDD cells of up to 2 TDD carriers and frequency division duplex (FDD) cells of up to 3 FDD carriers relying on the UE capability;
32 GSM cells that are allocated to 32 GSM frequencies, relying on the UE capability.

In the CELL_FACH state, a 1.28Mcps TDD UE can monitor most cells:

32 intra-frequency cells (including the current serving cell of the UE);
32 inter-frequency cells, including TDD cells of up to 3 TDD carriers and 3 FDD cells of up to 3 FDD carriers relying on the UE capability;
32 GSM cells that are allocated to 32 GSM frequencies, relying on the UE capability.

A UE in the CELL_FACH state needs to perform inter-frequency/inter-RAT measurement for cell reselection and new cell identification. The UE will locate system frame numbers (SFNs) that satisfy the following formula and carry out inter-frequency/inter-RAT measurement in the located SFNs:

$$\text{SFN div } N = \text{C\_RNTI mod M\_REP} + n \times \text{M\_REP} \quad (1)$$

where:

N represents a value obtained using 10 ms to divide the transmission timing interval (TTI) of a forward access channel (FACH) that has a maximum TTI, and the FACH is on a secondary common control physical channel (SCCPCH) that bears non-MBMS logical channels monitored by the UE. It is the period of time in which the UE performs inter-frequency/inter-RAT measurement.

$\text{M\_REP} = 2^k$, in which M_REP represents a cycle of a measurement interval; the cycle for the measurement time of an N-frame is $N \times \text{M\_REP}$ frames; k represents a FACH measurement interval cycle coefficient, which may be retrieved from an information element "FACH measurement occasion info" in system information 11 or 12.

C_RNTI(cell radio network temporary identity) represents the C-RNTI value of the UE;

n = 0, 1, 2 ..., as long as SFN is below its maximum value.

The UE measures continuously the identified inter-frequency/inter-RAT cells within the measurement time that satisfies the above the formula 1. In the meantime, it searches for new inter-frequency/inter-RAT cells indicated in the system measurement control information sent by the UTRAN.

In prior standards, the FDD UE receiving the MBMS PTM traffic identifies new inter-frequency cells by the following procedure below:

The UE receives system measurement control information from the UTRAN and retrieves the inter-frequency cell information indicated in the measurement control information to detect existent unidentified inter-frequency cells.

The UE detects the unidentified inter-frequency cells (the UE operates at the frequency of the new inter-frequency cell indicated in the system measurement control information and thinks that the inter-frequency cell is detected when it finds that the received signal is strong enough at this frequency).

The UE identifies the detected inter-frequency cells within the identification time ($T_{identify, inter}$) computed from the following formula:

$$T_{identify, inter} = Ceil\left\{\frac{T_{basic\_identify\_FDD, inter}}{T_{Inter\,FACH}}\right\} \cdot T_{meas} \cdot N_{Freq, FDD} \quad ms \quad (2)$$

where:

$T_{basic\_identify\_FDD, inter}$ = 300 ms or 800 ms, which represents the maximum duration in which the UE identifies new inter-frequency cells;
$N_{Freq, FDD}$ represents the number of FDD frequencies included in the inter-frequency cell list in the system measurement control information;

$$T_{meas} = \left[ \left( N_{FDD} + N_{TDD} + N_{GSM} \right) \cdot N_{TTI} \cdot M\_REP \cdot 10 \right] \quad (3)$$

where:

$N_{TTI}$ equals N in the formula I and M_REP is the same as that in the formula 1;
$N_{FDD}$ equals 0 or 1: if FDD inter-frequency cells are present in a neighbor cell list, $N_{FDD} = 1$; otherwise $N_{FDD} = 0$;
$N_{TDD}$ equals 0 or 1: if TDD inter-frequency cells are present in the neighbor cell list, $N_{TDD} = 1$; otherwise $N_{TDD} = 0$;
$N_{GSM}$ equals 0 or 1: if GSM inter-frequency cells are present in the neighbor cell list, $N_{GSM} = 1$; otherwise $N_{GSM} = 0$;
$T_{Inter\ FACH} = (N_{TTI} \times 10 - 2 \times 0.5)$ ms, where $N_{TTI}$ equals N in the formula 1.

The UE marks the newly identified inter-frequency cells as identified inter-frequency cells in the cell list stored by itself.

The FDD UE receiving the MBMS PTM traffic measures the common pilot channel (CPICH) by the following procedure below:

The UE receives system measurement control information or system broadcast information from the UTRAN and triggers the inter-frequency CPICH measurement.

The physical layer of the UE reports a measurement result to the upper layer within the measurement time ($T_{Measurement\ inter}$) obtained from the following formula:

$$T_{measurement\ inter} = Max\left\{ T_{Measurement\_Period,\ Inter}, 2 \cdot T_{meas}, Ceil\left\{ \frac{T_{basic\_measurement\_FDD,\ inter}}{T_{Inter\ FACH}} \right\} \cdot T_{meas} \cdot N_{Freq,FDD} \right\}$$

$$(4)$$

where:

$T_{basic\_measurement\_FDD,\ inter} = 50$ ms;
$T_{Measurement\_Period,\ Inter} = 480$ ms;

Other parameters are the same as those in the formulas 2 and 3.

The upper layer of the UE applies the measurement result reported by the physical layer to an internal algorithm (for instance, the measurement result can be an input parameter of the cell reselection algorithm) or reports the measurement result to the radio network controller (RNC).

In practice, however, to achieve the required MBMS demodulation performance, when an FDD UE receiving the MBMS PTM traffic identifies new inter-frequency cells and performs CPICH measurement on the cells, the UE may not be able to use the entire inter-frequency measurement time obtained from the formula 1 to do inter-frequency measurement. Instead, it may use only part of the inter-frequency measurement time to do the measurement. But in the formula 2 which is used to obtain the time for identifying new inter-frequency cells ($T_{identify,\ inter}$) and the formula 4 which is applied to obtain the measurement time ($T_{Measurement\ inter}$) for the physical layer of the UE to report the measurement result, the parameter $T_{Inter\ FACH} = (N_{TTI} \times 10 - 2 \times 0.5)$ ms means that the UE uses the entire inter-frequency measurement time computed based on the formula 1 to do inter-frequency measurement. Then the following problems may occur:

If the UE identifies a new inter-frequency cell within the $T_{idenlify,\ inter}$ obtained from the formula 2, and reports the CPICH measurement result of the new inter-frequency cell to the upper layer within the $T_{Measurement\ inter}$ obtained from the formula 4, the UE will have to use the entire inter-frequency measurement time computed based on the formula 1 to carry out inter-frequency measurement. This can degrade the UE's demodulation performance for the received MBMS traffic.

If the UE uses part of the inter-frequency measurement time computed based on the formula 1 to carry out inter-frequency measurement to guarantee MBMS demodulation performance, the UE may not be able to identify the new inter-frequency cell within the $T_{identify,\ inter}$ obtained from the formula 2 and not be able to report the CPICH measurement result of the new inter-frequency cell to the upper layer within the $T_{Measurement\ inter}$ obtained from the formula 4.

The above procedure has the same technical defect for an FDD UE receiving the MBMS PTM traffic in the CELL_FACH state to identify inter-RAT WCDMA TDD cells and report received signal code power (RSCP) measurement result of the primary common control physical channel (PCCPCH) in the inter-RAT WCDMA TDD cells.

In prior standards, when an FDD UE receiving the MBMS PTM traffic identifies a new inter-RAT WCDMA TDD cell detected in the monitor set, it is required that the inter-RAT SCDMA TDD cell be identified within the identification time ($T_{identify,\ TDD}$) computed based on the following formula:

$$T_{identify,\ TDD} = Max\left\{ 5000, Ceil\left\{ \frac{T_{basic\_identify\_TDD,\ inter}}{T_{Inter\ FACH}} \right\} \cdot T_{meas} \cdot N_{Freq,TDD} \right\} \text{ ms (5)}$$

where:

$T_{basic\_identify\_TDD,\ inter}$ = 300 ms or 800 ms;
$N_{Freq,\ TDD}$ represents the number of TDD frequencies included in the inter-frequency cell list in the system measurement control information;
Other parameters are the same as those in the formulas 2 and 3.

It is also required that the physical layer of the UE should report the PCCPCH RSCP measurement result of the inter-RAT WCDMA TDD cell to the upper layer within the measurement time ($T_{Measurement,\ TDD}$) computed based on the following formula:

$$T_{measurement,\ TDD} = Max\left\{ T_{Measurement\_Period\_TDD,\ inter}, 2 \cdot T_{meas}, Ceil\left\{ \frac{T_{basic\_measurement\_TDD,inter}}{T_{Inter\ FACH}} \right\} \cdot T_{meas} \cdot N_{Freq,TDD} \right\}$$

$$(6)$$

where:

$T_{basic\_measurement\_TDD,\ inter}$ = 50 ms;
$T_{Measurement\_Period\_TDD,\ inter}$ = 480 ms;
Other parameters are the same as those in the formulas 2 and 3.

Then the following problems may occur:
If the UE identifies a new inter-RAT WCDMA TDD cell within the $T_{identify,\ TDD}$ obtained from the formula 5, and reports the PCCPCH RSCP measurement result of the new inter-RAT WCDMA TDD cell to the upper layer within the $T_{Measurement,\ TDD}$ obtained from the formula 6, the UE will have to use the entire inter-RAT measurement time computed based on the formula 1 to carry out inter-RAT measurement. This can degrade the UE's demodulation performance for the received MBMS traffic.
If the UE uses part of the inter-RAT measurement time computed based on the formula 1 to carry out inter-RAT measurement to guarantee MBMS demodulation performance, the UE may not be able to identify the new inter-RAT WCDMA TDD cell within the $T_{identify,\ TDD}$ obtained from the formula 5 and not be able to report the PCCPCH RSCP measurement result of the new inter-RAT WCDMA TDD cell to the upper layer within the $T_{Measurement,\ TDD}$ obtained from the formula 6.
A TDD UE measures FDD inter-frequency cells, TDD inter-frequency cells, and GSM cells at intervals of $T_{meas}$, which satisfies the following formula:

$$T_{meas} = \left[ \left( N_{FDD} + N_{TDD} + N_{GSM} \right) \cdot N_{TTI} \cdot M\_REP 10 \right] \quad (7)$$

where, all parameters are the same as those in the formula 3.
The TDD UE measures identified inter-frequency cells continuously within the inter-frequency/inter-RAT measurement periods and searches for new inter-frequency/inter-RAT cells indicated in the system measurement control information sent by the UTRAN.
In prior standards, a TDD UE receiving the MBMS PTM traffic measures inter-frequency/inter-RAT cells by the following procedure below:

The TDD UE receives system measurement control information from the UTRAN and triggers the inter-frequency/inter-RAT measurement on the inter-frequency/inter-RAT cell indicated in the measurement control information.

The TDD UE measures the inter-frequency/inter-RAT cell within the measurement time computed from the formula I and/or the idle time (the TDD mode differentiates uplink and downlink timeslots in one frame and the timeslot in which a TDD UE neither receives nor transmits traffic is the idle time of the TDD UE). During the time of inter-frequency/inter-RAT measurement, the TDD UE will interrupt the reception of the MBMS PTM traffic.

The TDD UE receives the MBMS PTM traffic in other time when inter-frequency/inter-RAT measurement is not active.

In practice, however, because TDD UEs receiving the MBMS PTM traffic will interrupt the reception of MBMS PTM traffic during inter-frequency/inter-RAT measurement, while, in most cases, each TDD UE interrupts the reception of MBMS PTM traffic at different points of time, it is hard for the network to determine which MBMS PTM data that are not received by the TDD UEs to retransmit. As a result, the quality of the MBMS PTM reception is poor for the TDD UE.

In prior standards, a TDD UE receiving the MBMS PTM traffic identifies a new inter-frequency cell by the following procedure below:

The TDD UE receives system measurement control information from the UTRAN and retrieves the inter-frequency cell information indicated in the measurement control information to detect existent unidentified inter-frequency cells.

The TDD UE detects the unidentified inter-frequency cells (the UE operates at the frequency of the new inter-frequency cell indicated in the system measurement control information and thinks that the inter-frequency cell is detected when it finds that the received signal is strong enough at this frequency).

The TDD UE identifies the detected inter-frequency cells within the identification time ($T_{\text{identify inter}}$) computed from the the formula below:

For a 3.84Mcps TDD UE to identify a new inter-frequency TDD cell in the monitor set, the required $T_{\text{identify inter}}$ satisfies the following formula:

$$T_{\text{identify inter}} = Max \left\{ 5000, Ceil \left\{ \frac{T_{\text{basic\_identify\_TDD inter}}}{T_{\text{Inter FACH}}} \right\} \cdot T_{\text{meas}} \cdot N_{\text{Freq,TDD}} \right\} \quad (8)$$

where:

$T_{\text{basic\_identify--TDD inter}}$ = 300 ms or 800 ms, which represents the maximum allowed time to identify the new TDD cell.

$N_{\text{Freq, TDD}}$ represents the number of TDD frequencies included in the inter-frequency cell list indicated in the system measurement control information from the UTRAN.

Other parameters are the same as those in the formulas 2 and 3.

For a 1.28Mcps TDD UE to identify a new inter-frequency TDD cell in the monitor set, the required $T_{\text{identify}}$ inter satisfies the following formula:

$$T_{\text{identify inter}} = Max \left\{ 5000, N_{\text{basic\_identify\_TDD, inter}} \cdot \frac{T_{\text{Measurement Period, Inter}}}{N_{\text{Inter FACH}}} \cdot N_{\text{Freq}} \right\} ms \quad (9)$$

where:

$T_{\text{Measurement\_Period, Inter}}$ = 480 ms.

$N_{\text{Inter FACH}}$ represents the number of sub-frames where PCCPCH and DwPCH signals of the target inter-frequency TDD cell reside, and the PCCPCH and DwPCH signals can be received within the measurement period ($T_{\text{measurement\_Period, Inter}}$). This value is obtained based on channel assignment and the measurement time in the CELL_FACH state (including the idle time and the measurement time computed from the formula 1), which allows for a margin of $2 \times 0.1$ ms. Within the measurement time computed from the formula 1, the UE measures inter-frequency cells that cannot be measured in the idle time.

$N_{basic\_identify\_TDD, Inter}$ = 160, which represents the number of sub-frames received within $T_{basic\_identify\_TDD inter}$.

$N_{Freq}$ represents the number of TDD frequencies included in the inter-frequency cell list indicated in the system measurement control information from the UTRAN.

The TDD UE marks the newly identified inter-frequency cells as identified inter-frequency cells in the cell list stored by itself.

A TDD UE receiving the MBMS PTM traffic measures the primary common control physical channel (PCCPCH) of a new inter-frequency cell by the following procedure below:

The TDD UE receives system measurement control information or system broadcast information from the UTRAN and triggers the PCCPCH measurement on the inter-frequency TDD cell.

The physical layer of the TDD UE reports the measurement result to the upper layer within the measurement time ($T_{Measurement inter}$) obtained from the following formula:

For a 3.84Mcps TDD UE, the required $T_{Measurement inter}$ satisfies the following formula:

$$T_{measurement\ inter} = Max\left\{T_{measurement\ period\ TDD\ inter}, 2 \cdot T_{meas}, Ceil\left\{\frac{T_{basic\ measurement\ TDD\ inter}}{T_{Inter\ FACH}}\right\} \cdot T_{meas} \cdot N_{Freq}\right\}$$

(10)

where:

$T_{basic\ measurement\ TDD\ inter}$ = 50 ms.
$T_{Measurement\ Period\ TDD\ Inter}$ = 480 ms.

Other parameters are the same as those in the formulas 2 and 3.

For a 1.28Mcps TDD UE, the required $T_{Measurement inter}$ satisfies the following formula:

$$T_{measurement\ inter} = Max\left\{T_{Measurement\_Period,\ Inter}, N_{basic\_measurement\_TDD\ inter} \cdot \frac{T_{Measurement\_Period,\ Inter}}{N_{Inter\ FACH}} \cdot N_{Freq}\right\}ms$$

(11)

where:

$T_{basic\_measurement\_TDD\ inter}$ = 50 ms.

Other parameters are the same as those in the formula 9.

The upper layer of the TDD UE applies the measurement result reported by the physical layer to an internal algorithm (for instance, the measurement result can be an input parameter of the cell reselection algorithm) or reports the measurement result to the radio network controller (RNC).

In practice, however, to achieve the required MBMS demodulation performance, when a TDD UE receiving the MBMS PTM traffic identifies and performs PCCPCH measurement on new inter-frequency cells, the UE may not be able to use the entire inter-frequency measurement time obtained from the formula 1 to do inter-frequency measurement. Instead, it may use only part of the inter-frequency measurement time to do the measurement. But in the formulas 8 and 9 used to obtain the time for identifying new inter-frequency cells ($T_{identify inter}$) and the formulas 10 and 11 applied to obtain the measurement time ($T_{Measurement inter}$) for the physical layer of the TDD UE to report the measurement result, the parameter $T_{Inter\ FACH}$ = ($N_{TTI} \times 10 - 2 \times 0.5$) ms means that the UE uses the entire inter-frequency measurement time to do inter-frequency measurement. Then the following problems may occur:

If the TDD UE identifies a new inter-frequency cell within the $T_{identify inter}$ obtained from the formulas 8 and 9, and reports the PCCPCH measurement result of the new inter-frequency cell to the upper layer within the $T_{Measurement inter}$ obtained from the formulas 10 and 11, the UE will have to use the entire idle time and/or the entire inter-frequency measurement time computed based on the formula 1 to carry out inter-frequency measurement. This can degrade the UE's demodulation performance for the received MBMS traffic.

If the TDD UE uses part of the idle time and/or inter-frequency measurement time computed based on the formula 1 to carry out inter-frequency measurement to guarantee MBMS demodulation performance, the UE may not be able to identify the new inter-frequency cell within the $T_{identify\,inter}$ obtained from the formulas 8 and 9 and not be able to report the PCCPCH measurement result of the new inter-frequency cell to the upper layer within the $T_{Measurement\,inter}$ obtained from the formulas 10 and 11.

The above procedure has the same technical defect for a TDD UE receiving the MBMS PTM traffic to identify inter-RAT WCDMA TDD cells and report the common pilot channel (CPICH) measurement result of an inter-RAT WCDMA TDD cell.

In prior standards, a TDD UE receiving the MBMS PTM traffic is required to identify an inter-RAT WCDMA FDD cell in the monitor set within the $T_{identify\,FDD\,inter}$ obtained from the formula below:

For a 3.84Mcps TDD UE, the required $T_{identify\,FDD\,inter}$ satisfies the following formula:

$$T_{identify\ FDD\ inter} = Max\left\{5000\,,Ceil\left\{\frac{T_{basic\_identify\_FDD\,inter}}{T_{Inter\,FACH}}\right\}\cdot T_{meas}\cdot N_{Freq\,,FDD}\right\}\quad(12)$$

where:

$T_{basic\_identify\_FDD\,inter}$ = 300 ms or 800 ms, which is the maximum allowed time for the TDD UE to identify the new WCDMA FDD cell.

$N_{Freq,\,FDD}$ represents the number of FDD frequencies included in the inter-frequency cell list indicated in the system measurement control information from the UTRAN.

$T_{Inter\,FACH}$ = $(N_{TTI}\times10-2\times0.5)$ ms.

Other parameters are the same as those in the formulas 2 and 3.

For a 1.28Mcps TDD UE, the required $T_{identify\_FDD\,inter}$ satisfies the following formula:

$$T_{identify\_F\,DD\ inter} = Max\left\{5000\,,T_{basic\ identify\ FDD\,inter}\cdot\frac{T_{Measuremen\,t\_Period\ FDD\,inter}}{T_{Inter\,,FACH}}\cdot N_{Freq}\right\}ms\quad(13)$$

where:

$T_{Measurement\_Period\,FDD\,inter}$ = 480 ms.

$T_{inter,\,FACH}$ represents the minimum time for FDD measurement within $T_{Measurement\_Period\_FDD,inter}$. This value is obtained based on channel assignment and the measurement time in the CELL_FACH state (including the idle time and the measurement time computed from the formula 1), which allows for a margin of $2\times0.1$ ms. Suppose measurement is allowed in the measurement window within the idle time. Then, within the measurement time obtained from the formula 1, the UE measures inter-frequency cells that cannot be measured in the idle time.

$T_{basic\ identify\ FDD\,inter}$ = 800 ms, which represents the maximum allowed time for the TDD UE to identify a new FDD cell.

$N_{Freq}$ represents the number of FDD frequencies included in the inter-frequency cell list indicated in the system measurement control information from the UTRAN.

In prior standards, the physical layer of the TDD UE receiving the MBMS PTM traffic reports the CPICH measurement result to the upper layer within the $T_{Measurement\,FDD\,inter}$ obtained from the the formula below:

For a 3.84Mcps TDD UE, the required $T_{Measurement\,FDD\,inter}$ satisfies the following formula:

$$T_{measuremen\,t\,FDD\,inter} = Max\left\{T_{measuremen\,t\,period\,FDD\,inter}\,,2\cdot T_{meas}\,,Ceil\left\{\frac{T_{basic\_measuremen\,t\_FDD\,inter}}{T_{Inter\,FACH}}\right\}\cdot T_{meas}\cdot N_{Freq\,,FDD}\right\}\quad(14)$$

where:

$T_{basic\_measurement\_FDD\ inter}$ = 50 ms.
$T_{Measurement\ Period\ FDD\ inter}$ = 480 ms;
$T_{inter\ FACH}$ = $(N_{TTI} \times 10 - 2 \times 0.5)$ ms.

Other parameters are the same as those in the formulas 2 and 3.
For a 1.28Mcps TDD UE, the required $T_{Measurement\_FDD\ inter}$ satisfies the following formula:

$$T_{measurement\_FDD\ inter} = Max\left\{T_{Measurement\_Period\ FDD\ inter}, T_{basic\_measurement\_FDD\ inter} \cdot \frac{T_{Measurement\_Period\_FDD\ inter}}{T_{Inter,FACH}} \cdot N_{Freq}\right\} ms$$

$$(15)$$

where,

$T_{basic\_measurement\_FDD\ inter}$ = 50 ms and other parameters are the same as those in the formula 14.

This is also subject to the following problems:
If the TDD UE identifies a new inter-RAT WCDMA TDD cell within the $T_{identify\ FDD}$ inter obtained from the formulas 12 and 13, and reports the CPICH measurement result of the new inter-RAT WCDMA TDD cell to the upper layer within the $T_{Measurement\ FDD\ inter}$ obtained from the formulas 14 and 15, the UE will have to use the entire idle time or inter-RAT measurement time computed based on the formula 1 to carry out inter-RAT measurement. This can degrade the UE's demodulation performance for the received MBMS traffic.
If the TDD UE uses part of the inter-RAT measurement time computed based on the formula 1 to carry out inter-RAT measurement to guarantee MBMS demodulation performance, the UE may not be able to identify the new inter-RAT WCDMA TDD cell within the $T_{identify,\ FDD\ inter}$ obtained from the formulas 12 and 13 and not be able to report the CPICH measurement result of the new inter-RAT WCDMA TDD cell to the upper layer within the $T_{Measurement\ FDD\ inter}$ obtained from the formulas 14 and 15.
The above technical defects, which exist when a TDD UE measures and identifies an inter-frequency TDD cell or inter-RAT WCDMA FDD cell and reports the measurement result, also exist when a TDD UE measures and identifies a GSM cell and reports the measurement result.
EP-A1-1 478 198 relates to a mobile terminal and a communication method in a wireless system comprising a radio access network and a plurality of mobile terminals. To save processing time at the mobile terminal in order to perform inter-frequency measurements the mobile terminal receives data of a scalable data service from the radio access network, wherein the received data comprises a plurality of importance layers, receives a notification from the radio access network to perform inter-frequency measurements, and processes a subset of the importance layers of the received transmission data.
"Universal Mobile Telecommunications System (UMTS); Radio Resource Control (RRC) protocol specification (3GPP TS 25.331 version 6.4.0 Release 6); ETSI TS 125 331" ETSI STANDARDS, EUROPEAN TELECOMMUNICATIONS STANDARDS INSTITUTE, SOPHIA-ANTIPO, FR, vol. 3-R2, no. V640, December 2004 (2004-12), ISSN: 000-0001 specifies the Radio Resource Control protocol for the UE-UTRAN radio interface. The scope of this document also includes: the information to be transported in a transparent container between source RNC and target RNC in connection with SRNC relocation; the information to be transported in a transparent container between a target RNC and another system.

## Summary of the Invention

A method for inter-frequency/inter-RAT measurement in a 3rd generation mobile communications system, includes the following steps:

reserving a first time for receiving a multimedia broadcast/multicast service (MBMS) traffic;
reserving a second time for an inter-frequency/inter-RAT measurement, and the first time and the second time reserved from a system required inter-frequency/inter-RAT measurement time by a user equipment (UE);
receiving the MBMS traffic in the first time reserved; and
performing the inter-frequency/inter-RAT measurement in the second time reserved.

A user equipment in a 3rd generation mobile communications system, comprising:

a first time reserving unit, for reserving a first time for receiving an MBMS traffic from a system required inter-frequency/inter-RAT measurement time.

a second time reserving unit, for reserving a second time for inter-frequency/inter-RAT measurement from the system required inter-frequency/inter-RAT measurement time;

an MBMS receiving unit, receiving the MBMS traffic during the first time reserved by the first time reserving unit:

a measurement unit, for performing inter-frequency/inter-RAT measurement during the second time reserved by the second time reserving unit.

## Brief Description of the Drawings

Figure 1 shows the procedure for an FDD UE to identify an inter-frequency cell with adoption of the method for determining required measurement performance according to an embodiment of the invention.

Figure 2 shows the procedure for an FDD UE to report the CPICH measurement result of an inter-frequency cell to the upper layer with adoption of the method for determining required measurement performance according to an embodiment of the invention.

Figure 3 shows the procedure for an FDD UE to identify an inter-RAT WCDMA TDD cell with adoption of the method for determining required measurement performance according to an embodiment of the invention.

Figure 4 shows the procedure for an FDD UE to report the PCCPCH RSCP measurement result of an inter-RAT WCDMA TDD cell to the upper layer with adoption of the method for determining required measurement performance according to an embodiment of the invention.

Figure 5 shows the procedure for an FDD UE to identify an inter-RAT GSM cell with adoption of the method for determining required measurement performance according to an embodiment of the invention.

Figure 6 is a diagram showing the structure of a UE according to an embodiment of the invention.

## Detailed Description of the Invention

Embodiments of the invention disclose a method for inter-frequency/inter-RAT measurement to solve the conflict that a TDD UE receiving an MBMS PTM traffic will sacrifice the quality of MBMS PTM traffic reception for the proceeding of inter-frequency/inter-RAT measurement. The embodiments are based on the idea of assuring demodulation performance for the received MBMS information when a UE receiving MBMS information measures an inter-frequency/inter-RAT cell. The method thus enables a TDD UE receiving an MBMS PTM traffic to perform inter-frequency/system measurement while guaranteeing the demodulation performance for the MBMS PTM traffic.

With adoption of the method for inter-frequency/inter-RAT measurement according to an embodiment of the invention, a TDD UE receiving the MBMS PTM traffic may perform inter-frequency/system measurement as follows:

The TDD UE receives system measurement control information from the UTRAN and accordingly triggers the measurement of inter-frequency/inter-RAT cells.

The TDD UE selects part of the inter-frequency/inter-RAT measurement time from the idle time and/or the measurement time obtained from the formula 1 according to the prior art as a first reserved time and selects part of the inter-frequency/inter-RAT measurement time from the rest measurement time as a second reserved time, based on assured demodulation performance for the MBMS PTM traffic.

The TDD UE performs inter-frequency/inter-RAT measurement in the second reserved time and receives the MBMS PTM traffic in the first reserved time to assure the demodulation performance for the received MBMS PTM traffic.

With adoption of the method for inter-frequency/inter-RAT measurement based on MBMS traffic reception according to an embodiment of the invention, an FDD UE receiving MCCH information or both MCCH information and an MBMS PTM traffic may perform inter-frequency/inter-RAT measurement as follows:

The FDD UE receives system measurement control information from the UTRAN and accordingly triggers the measurement of inter-frequency/inter-RAT cells.

The FDD UE selects part of the inter-frequency/inter-RAT measurement time from the measurement time obtained from the formula 1 according to the prior art as a first reserved time and selects part of the inter-frequency/inter-RAT measurement time from the rest measurement time as a second reserved time, based on assured demodulation performance for MCCH information or both MCCH information and the MBMS PTM traffic.

The FDD UE performs inter-frequency/inter-RAT measurement in the second reserved time and receives MCCH information or both MCCH information and the MBMS PTM traffic in the first reserved time to assure the demodulation performance for received MCCH information or both MCCH information and the MBMS PTM traffic.

According to another embodiment of the invention, the method for inter-frequency/inter-RAT measurement can also be applied to a TDD UE receiving the MBMS PTM control information (specifically, MCCH information) so that the TDD UE performs inter-frequency/inter-RAT measurement based on assured demodulation performance for the received MCCH traffic. The procedure is similar to the above procedure for receiving the MBMS PTM traffic.

With the above method for inter-frequency/inter-RAT measurement, a UE performs inter-frequency/inter-RAT measurement in the second reserved time and further, based on the measurement result, the UE may select a cell of better quality as target serving cell.

Based on the method for inter-frequency/inter-RAT measurement, embodiments of the invention further provide a method for determining required measurement performance for a UE according to the (inter-frequency/inter-RAT or intra-frequency) measurement time obtained based on assured MBMS demodulation performance. The embodiments solve the conflict that a UE receiving the MBMS PTM traffic only uses part of the (inter-frequency/inter-RAT or intra-frequency) measurement time to do (inter-frequency/inter-RAT or intra-frequency) measurement for the purpose of assuring MBMS demodulation performance while the UE has to use the entire (inter-frequency/inter-RAT or intra-frequency) measurement time to determine the time required to identify a new (inter-frequency/inter-RAT or intra-frequency) cell or report the measurement result of the new (inter-frequency/inter-RAT or intra-frequency) cell.

According to an embodiment of the invention, the method for determining required measurement performance determines the required measurement performance by taking into consideration the demodulation performance for MBMS information (for example MBMS PTM traffic) for a UE (for example a TDD UE or an FDD UE) that receives MBMS information (for example MBMS PTM traffic). Thus the UE may identify a new cell or report the measurement result within the time required by the measurement performance.

For an FDD UE, the adoption of the method for determining required measurement performance according to an embodiment of the invention may achieve the following purposes:

For an FDD UE receiving an MBMS PTM traffic in a CELL_FACH state to identify new inter-frequency/inter-RAT cells, this method takes into consideration the demodulation performance for the received MBMS traffic when the UE determines the time to identify new inter-frequency/inter-RAT cells, thus assuring the demodulation performance for the received MBMS traffic.

For the physical layer of an FDD UE receiving an MBMS PTM traffic in a CELL_FACH state to report the measurement result of a new inter-frequency/inter-RAT cell to the upper layer, this method also takes into consideration the demodulation performance for the received MBMS traffic when the UE determines the measurement period to report the measurement result, thus assuring the demodulation performance for the received MBMS traffic.

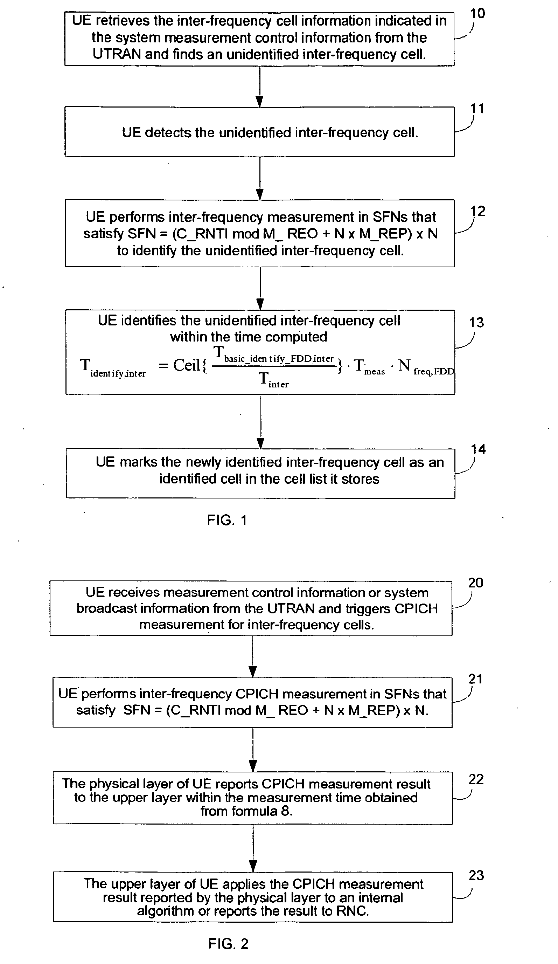

Figure 1 shows the procedure for an FDD UE to identify an inter-frequency cell with adoption of the method for determining required measurement performance according to an embodiment of the invention. The procedure for an FDD UE receiving an MBMS PTM traffic (or MCCH information) in a CELL_FACH state to identify a new inter-frequency cell is as below:

Step 10: The FDD UE receives system measurement control information from the UTRAN and retrieves the inter-frequency cell information indicated in the measurement control information to find that an unidentified inter-frequency cell is present.

Step 11: The FDD UE detects the unidentified inter-frequency cell.

Step 12: The FDD UE performs inter-frequency measurement in SFNs that satisfy the following formula to identify the unidentified inter-frequency cell detected in step 11:

$$\mathrm{SFN} = (\mathrm{C\_RNTI} \bmod \mathrm{M\_REP} + n \times \mathrm{M\_REP}) \times N$$

In the formula, N represents the result obtained using 10 ms to divide the transmission timing interval (TTI) of the forward access channel (FACH) that has a maximum TTI, and the FACH is on the secondary common control physical channel (SCCPCH) that bears non-MBMS logical channels monitored by the FDD UE;

$M\_REP = 2^k$, in which M_REP represents a cycle of a measurement interval; k represents a FACH measurement interval cycle coefficient, which may be retrieved from an information element "FACH measurement occasion info" in system information 11 or 12;

C_RNTI represents the cell radio network temporary identity of the UE;

n = 0, 1, 2 ..., as long as SFN is below its maximum value.

Step 13: The FDD UE identifies the unidentified inter-frequency cell detected in step 11 within the identification time obtained from the following formula:

$$T_{identify,\ inter} = Ceil\left\{\frac{T_{basic\_identify\_FDD,\ inter}}{T_{Inter}}\right\} \cdot T_{meas} \cdot N_{Freq,FDD} \quad ms$$

$$(16)$$

where:

$T_{identify,\ inter}$ represents the time for the FDD UE to identify the new inter-frequency cell;
$T_{basic\_identify\_FDD,\ inter}$ = 300 ms or 800 ms, which represents the maximum allowed time for the FDD UE to identify the new inter-frequency cell;
$N_{Freq,\ FDD}$ represents the number of FDD frequencies included in the inter-frequency cell list in the system measurement control information from the UTRAN;

$$T_{meas} = \left[\left(N_{FDD} + N_{TDD} + N_{GSM}\right) \cdot N_{TTI} \cdot M\_REP \cdot 10\right]$$

where:

$N_{TTI}$ equals N in step 12 and M_REP equals that in step 12;
$N_{FDD}$ equals 0 or 1: if any inter-frequency FDD cell is present in a neighbor cell list, $N_{FDD} = 1$; otherwise $N_{FDD} = 0$;
$N_{TDD}$ equals 0 or 1: if any inter-frequency TDD cell is present in the neighbor cell list, $N_{TDD} = 1$; otherwise $N_{TDD} = 0$;
$N_{GSM}$ equals 0 or 1: if any inter-frequency GSM cell is present in the neighbor cell list, $N_{GSM} = 1$; otherwise $N_{GSM} = 0$;
$T_{Inter}$ represents the available inter-frequency measurement time determined by the FDD UE based on assured MBMS demodulation performance, or the available inter-frequency measurement time determined by the FDD UE based on assured MBMS demodulation performance minus the receiver conversion time;

The receiver conversion time depends on the hardware of the receiver; currently, it equals usually $2 \times 0.5$ ms = 1 ms.

Step 14: The FDD UE marks the inter-frequency cell identified in step 13 as an identified cell in a cell list stored by itself.

Figure 2 shows the procedure for an FDD UE to report the CPICH measurement result of an inter-frequency cell to the upper layer with adoption of the method for determining required measurement performance according to an embodiment of the invention. The procedure for an FDD UE receiving an MBMS PTM traffic in a CELL_FACH state to measure the CPICH of an inter-frequency cell and report the CPICH measurement result is as below:

Step 20: The FDD UE receives system measurement control information or system broadcast information from the UTRAN and triggers the CPICH measurement on inter-frequency cells.
Step 21: The FDD UE performs the CPICH measurement on inter-frequency cells in SFNs that satisfy the following formula:

$$SFN = (C\_RNTI \bmod M\_REP + n \times M\_REP) \times N \quad (17)$$

The parameters in the formula are the same as those previously described.

Step 22: The physical layer of the FDD UE reports the CPICH measurement result to the upper layer within the measurement time obtained from the following formula:

$$T_{measuremen\ inter} = Max\left\{ T_{Measurement\_Period,\ Inter}, 2 \cdot T_{meas}, Ceil\left\{ \frac{T_{basic\_measuremen\_FDD, inter}}{T_{Inter}} \right\} \cdot T_{meas} \cdot N_{Freq,FDD} \right\} \tag{18}$$

where:

T$_{measurement inter}$ indicates the measurement time for the physical layer of the FDD UE to report the CPICH measurement result of inter-frequency cells;

T$_{basic\_measurement\_FDD, inter}$ = 50 ms;

T$_{Measurement\_Period, Inter}$ = 480 ms;

T$_{Inter}$ represents the available measurement time determined by the FDD UE based on assured MBMS demodulation performance, or the available measurement time determined by the FDD UE based on assured MBMS demodulation performance minus the receiver conversion time; the conversion time depends on the hardware capability of the receiver and equals usually 1 ms;

For other parameters, refer to the previous descriptions.

Step 23: The upper layer of the FDD UE applies the CPICH measurement result reported by the physical layer to an internal algorithm or reports the result to the RNC.

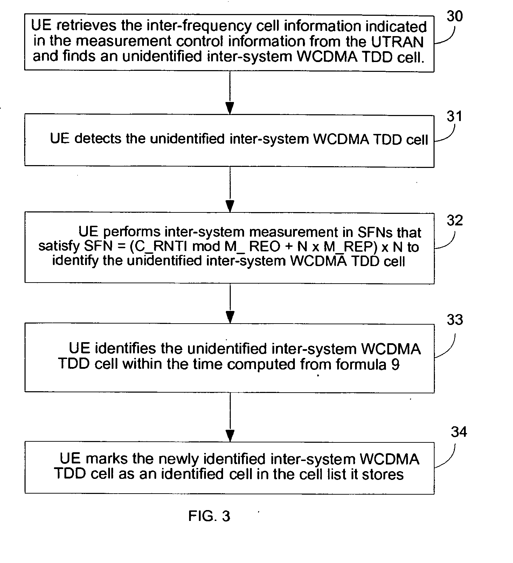

Figure 3 shows the procedure for an FDD UE to identify an inter-RAT WCDMA TDD cell with adoption of the method for determining required measurement performance according to an embodiment of the invention. The procedure for an FDD UE receiving the MBMS PTM traffic in the CELL_FACH state to identify a new inter-RAT WCDMA TDD cell is as follows:

Step 30: The FDD UE receives system measurement control information from the UTRAN and retrieves the inter-frequency cell information indicated in the measurement control information to find the presence of an unidentified inter-RAT WCDMA TDD cell.

Step 31: The FDD UE detects the unidentified inter-RAT WCDMA TDD cell.

Step 32: The FDD UE performs inter-RAT measurement in SFNs that satisfy the following formula to identify the unidentified inter-RAT WCDMA TDD cell detected in step 31:

$$SFN = (C\_RNTI \bmod M\_REP + n \times M\_REP) \times N$$

For the parameters in the formula, refer to the previous descriptions.

Step 33: The FDD UE identifies the unidentified inter-RAT WCDMA TDD cell within the identification time obtained from the following formula:

$$T_{identify,\ TDD} = Max\left\{ 5000, Ceil\left\{ \frac{T_{basic\_identify\_TDD,inter}}{T_{Inter}} \right\} \cdot T_{meas} \cdot N_{Freq,TDD} \right\} \tag{19}$$

where:

T$_{identify, TDD}$ represents the time for the FDD UE to identify the inter-RAT WCDMA TDD cell;

T$_{basic\_identify\_TDD, inter}$ = 300 ms or 800 ms, which represents the maximum allowed time for the FDD UE to identify the inter-RAT WCDMA TDD cell;

N$_{Freq, TDD}$ represents the number of TDD frequencies included in the inter-frequency cell list in the system measurement control information from the UTRAN;

T$_{Inter}$ represents the available inter-RAT measurement time determined by the FDD based on assured MBMS demodulation performance, or the available inter-RAT measurement time determined by the FDD based on assured MBMS demodulation performance minus the receiver conversion time; the conversion time depends on the hardware capability of the receiver and equals usually 1 ms;

For other parameters, refer to the previous descriptions.

Step 34: The FDD UE marks the inter-RAT WCDMA TDD cell newly identified in step 33 as an identified cell in the cell list stored by itself.

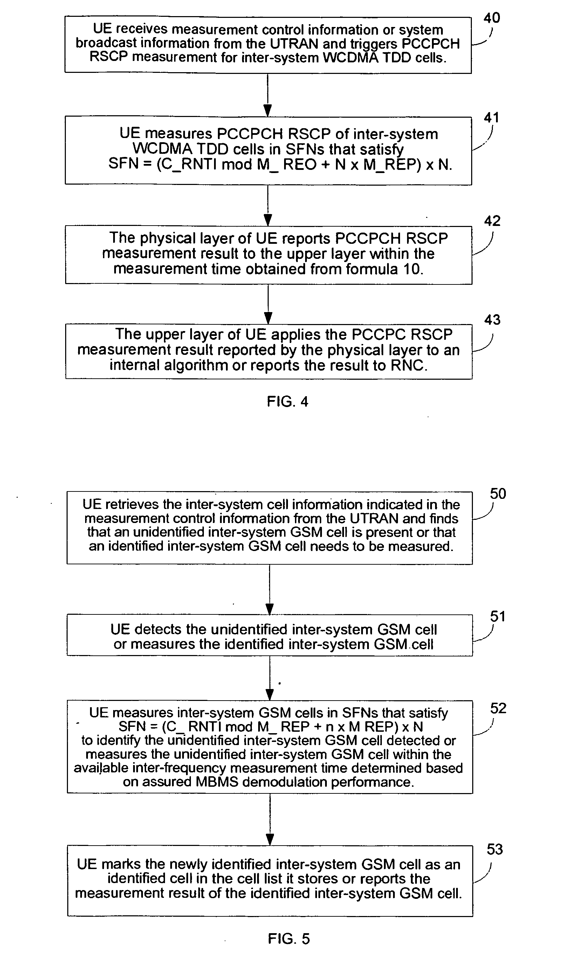

Figure 4 shows the procedure for an FDD UE to report the PCCPCH RSCP measurement result of an inter-RAT WCDMA TDD cell to the upper layer with adoption of the method for determining required measurement performance according to an embodiment of the invention. The procedure for an FDD UE receiving an MBMS PTM traffic in a CELL_FACH state to measure the PCCPCH RSCP of an inter-RAT WCDMA TDD cell and report the PCCPCH RSCP measurement result is as follows:

Step 40: The FDD UE receives system measurement control information from the UTRAN and triggers PCCPCH RSCP measurement on inter-RAT WCDMA TDD cells.

Step 41: The FDD UE measures the PCCPCH RSCP of inter-RAT WCDMA TDD cells in SFNs that satisfy the following formula:

$$SFN = (C\_RNTI \bmod M\_REP + n \times M\_REP) \times N$$

For parameters in the formula, refer to the previous descriptions.

Step 42: The physical layer of the FDD UE reports the PCCPCH RSCP measurement result to the upper layer within the measurement time obtained from the following formula:

$$T_{measurement\,,\,TDD} = Max\left\{ T_{Measurement\_Period\_TDD.inter}, 2 \cdot T_{meas}, Ceil\left\{ \frac{T_{basic\_measurement\_TDD.inter}}{T_{Inter}} \right\} \cdot T_{meas} \cdot N_{Freq.TDD} \right\}$$

$$(20)$$

where:

$T_{basic\_measurement\_TDD,\,inter}$ = 50 mS;
$T_{Measurement\_Period\_TDD,\,inter}$ = 480 ms;

$N_{Freq,\,TDD}$ represents the number of TDD frequencies included in the inter-frequency cell list in the system measurement control information from the UTRAN;

$T_{Inter}$ represents the available inter-RAT measurement time determined by the FDD UE based on assured MBMS demodulation performance, or the available inter-RAT measurement time determined by the FDD UE based on assured MBMS demodulation performance minus the receiver conversion time; the conversion time depends on the hardware capability of the receiver and equals usually 1 ms.

Step 43: The upper layer of the FDD UE applies the PCCPCH RSCP measurement result reported by the physical layer to an internal algorithm or reports the result to the RNC.

Figure 5 shows the procedure for an FDD UE to identify an inter-RAT GSM cell with adoption of the method for determining required measurement performance according to an embodiment of the invention. The procedure for an FDD UE receiving an MBMS PTM traffic in a CELL_FACH state to identify a new inter-RAT GSM cell or measure an identified inter-RAT GSM cell is as follows:

Step 50: The FDD UE receives system measurement control information from the UTRAN and retrieves the inter-RAT cell information indicated in the measurement control information to find that an unidentified inter-RAT GSM cell is present or that an identified inter-RAT GSM cell needs to be measured.

Step 51: The FDD UE detects the unidentified inter-RAT GSM cell or measures the identified inter-RAT GSM cell.

Step 52: The FDD UE measures inter-RAT GSM cells in SFNs that satisfy the following formula to identify the unidentified inter-RAT GSM cell detected in Step 51 or measures the unidentified inter-RAT GSM cell within the available inter-frequency measurement time determined based on assured MBMS demodulation performance, or if there is a receiver conversion process, within the determined available inter-frequency measurement time minus the receiver conversion time; the conversion time depends on the hardware capability of the receiver and equals usually 1 ms;

$$SFN = (C\_RNTI \bmod M\_REP + n \times M\_REP) \times N$$

where:

N represents the value obtained using 10 ms to divide the TTI of the FACH that has a maximum TTI, and the FACH is on the SCCPCH that bears non-MBMS logical channels the FDD UE monitors;
$M\_REP = 2^k$, in which M_REP represents the cycle of a measurement interval; the cycle for the measurement time of an N-frame is $N \times M\_REP$ frames; k represents the FACH measurement interval cycle coefficient, which may be retrieved from the information element "FACH measurement occasion info" in system information 11 or 12;
C_RNTI represents the cell radio network temporary identity of the FDD UE;
n = 0, 1, 2..., as long as SFN is below its maximum value;

Step 53: The FDD UE marks the newly identified inter-RAT GSM cell as an identified cell in the cell list stored by itself or reports the measurement result of the identified inter-RAT GSM cell.

This procedure is also applicable when an FDD UE receiving an MBMS PTM traffic in a CELL_FACH state measures the received signal strength indicator (RSSI) or identifies the base transceiver station identity code (BSIC) of a GSM cell, or revalidates the BSIC.

According to another embodiment of the invention, the method for determining required measurement performance is also applicable when an FDD UE receiving MBMS information measures intra-frequency cells. In this case, the UE determines the required measurement performance by taking into consideration the demodulation performance for MBMS information (for example an MBMS PTM traffic or MCCH information), thus assuring that the UE finishes identifying a new cell or reporting the measurement result to the upper layer within the timer required by the measurement performance based on assured MBMS demodulation performance.

The FDD UE identifies a new intra-frequency cell within the $T_{identify, intra}$ obtained from the formula below:

$$T_{identify,\ intra} = Max \left\{ 800,\ Ceil \left\{ \frac{T_{basic\ identify\ FDD,\ intra}}{T\ int\ ra} \right\} \cdot N_{TTI} \cdot M\_REP \cdot 10 \right\} \quad (21)$$

where,

$T$ int $ra$ represents the available intra-frequency measurement time determined by the FDD UE based on assured MBMS demodulation performance, or if receiver conversion time is considered, $T$ int $ra$ represents the available intra-frequency measurement time determined by the FDD UE based on assured MBMS demodulation performance minus the receiver conversion time (measured in ms);

The receiver conversion time depends on the hardware capability of the receiver and is usually equal to $2 \times 0.5ms = 1$ ms;

For other parameters, refer to the previous descriptions.

In addition, the FDD UE reports the intra-frequency measurement result to the upper layer at regular intervals of 200 ms but the reported number of cells is determined by the formula below:

$$Y_{measurement\ intra} = Floor \left\{ X_{basic\ measurement\ FDD} \cdot \frac{T_{Measurement\_Period\ intra} - Ceil \left\{ \frac{T_{Measurement\_Period\ intra}}{N_{TTI} \cdot M\_REP \cdot 10\ ms} \right\} \cdot Tin}{T_{Measurement\_Period\ intra}} \right\} \quad (22)$$

$T_{in} = N_{TTI} \times 10$, which represents the available inter-frequency/inter-RAT measurement time determined by the UE based on assured MBMS demodulation performance; or the available inter-frequency/inter-RAT measurement time determined by the UE based on assured MBMS demodulation performance minus the receiver conversion time.

If the method for determining required measurement performance is applied to a TDD UE according to another embodiment of the invention, the procedure is as follows:

The TDD UE receives system measurement control information from the UTRAN and accordingly triggers inter-frequency/inter-RAT measurement.

The TDD UE selects part of the idles time and/or the measurement time computed from the formula 1 according to the prior art as the inter-frequency/inter-RAT measurement time, based on assured demodulation performance for the MBMS PTM traffic (or MCCH information).

The TDD UE performs inter-frequency/inter-RAT measurement within the selected inter-frequency/inter-RAT measurement time, and receives the MBMS PTM traffic in other time.

The TDD UE determines the required inter-frequency/inter-RAT measurement performance by using the inter-frequency/inter-RAT measurement time selected in step 2.

According to the determined measurement performance requirement, the TDD UE receiving the MBMS PTM traffic identifies a new inter-frequency cell by following the procedure below:

The TDD UE receives system measurement control information from the UTRAN and retrieves the inter-frequency cell information indicated in the measurement control information to find the presence of an unidentified inter-frequency cell.

The TDD UE detects the unidentified inter-frequency cell.

The TDD UE performs inter-frequency measurement within part of the idle time and/or the measurement time computed from the formula 1 according to the prior art to identify the new inter-frequency cell.

The TDD UE finishes identifying the new inter-frequency cell within the time obtained from the the formula below:

For a 3.84Mcps TDD UE to identify a new inter-frequency TDD cell in the monitor set, the required identification time satisfies the following formula:

$$
\mathrm{T_{identify\ inter}} = Max \left\{ 5000, Ceil \left\{ \frac{\mathrm{T_{basic\_identify\_TDD\ inter}}}{\mathrm{T_{Inter}}} \right\} \cdot \mathrm{T_{meas}} \cdot N_{Freq,TDD} \right\} \tag{23}
$$

where:

$\mathrm{T_{Inter}}$ represents the available inter-frequency measurement time determined by the TDD UE based on assured MBMS demodulation performance, or if receiver conversion time is considered, $\mathrm{T_{Inter}}$ represents the available inter-frequency measurement time determined by the TDD UE based on assured MBMS demodulation performance minus the receiver conversion time; the conversion time depends on the hardware capability of the receiver and is usually equal to $2 \times 0.5$ ms = 1 ms;

For other parameters, refer to the description of the formula 8 in the prior art.

For a 1.28Mcps TDD UE to identify a new inter-frequency TDD cell in the monitor set, the required identification time satisfies the following formula:

$$
\mathrm{T_{identify\ inter}} = Max \left\{ 5000, \mathrm{N_{basic\_identify\_TDD,\ inter}} \cdot \frac{\mathrm{T_{Measurement\ Period,\ Inter}}}{\mathrm{N_{Inter}}} \cdot N_{Freq} \right\} ms \tag{24}
$$

where:

$\mathrm{N_{Inter}}$ represents the number of subframes where PCCPCH and DwPCH signals reside, and the PCCPCH and DwPCH signals are received from the target inter-frequency TDD cell within the available inter-frequency measurement time determined by the TDD UE based on assured MBMS demodulation performance; if receiver conversion time is considered, $\mathrm{N_{Inter}}$ represents the number of subframes where PCCPCH and DwPCH signals reside, and the PCCPCH and DwPCH signals are received from the target inter-frequency TDD cell within the available inter-frequency measurement time determined by the TDD UE based on assured MBMS demodulation performance minus the receiver conversion time; the conversion time depends on the hardware capability of the receiver and is usually equal to $2 \times 0.5$ ms = 1 ms;

For other parameters, refer to therefer to the previous description of the formula 9 in the prior art.

The TDD UE marks the newly identified inter-frequency TDD cell as an identified cell in the cell list stored by itself.

A TDD UE receiving an MBMS PTM traffic measures the PCCPCH of inter-frequency TDD cells by the following procedure below:

The TDD UE receives system measurement control information from the UTRAN and triggers the PCCPCH measurement on inter-frequency TDD cells.

The TDD UE measures the PCCPCH of inter-frequency TDD cells in part of the time it selects from the idle time and/or the measurement time obtained from the formula 1 according to the prior art.

The physical layer of the TDD UE reports the measurement result to the upper layer within the $T_{Measurement, Inter}$ computed from the formula below:

For a 3.84Mcps TDD UE, the required $T_{Measurement, inter}$ satisfies the following formula:

$$T_{\text{measurement inter}} = Max\left\{T_{\text{measurement period TDD inter}}, 2 \cdot T_{\text{meas}}, Ceil\left\{\frac{T_{\text{basic measurement TDD inter}}}{T_{\text{Inter}}}\right\} \cdot T_{\text{meas}} \cdot N_{Freq}\right\}$$

$$(25)$$

where:

$T_{Inter}$ represents the available inter-frequency measurement time determined by the TDD UE based on assured MBMS demodulation performance; if receiver conversion time is considered, $T_{Inter}$ represents the available inter-frequency measurement time determined by the TDD UE based on assured MBMS demodulation performance minus the receiver conversion time;

The receiver conversion time depends on the hardware capability of the receiver and is usually equal to $2 \times 0.5$ ms = 1 ms;

For other parameters, refer to the description of the formula 10 in the prior art.

For a 1.28Mcps TDD UE, the required $T_{Measurement, inter}$ satisfies the following formula:

$$T_{\text{measurement inter}} = Max\left\{T_{\text{Measurement\_Period, Inter}}, N_{\text{basic\_measurement\_TDD inter}} \cdot \frac{T_{\text{Measurement\_Period, Inter}}}{N_{\text{Inter}}} \cdot N_{Freq}\right\}ms$$

$$(26)$$

where:

$N_{Inter}$ represents the number of subframes where PCCPCH and DwPCH signals reside, and the PCCPCH and DwPCH signals are received from the target inter-frequency TDD cell within the available inter-frequency measurement time determined by the TDD UE based on assured MBMS demodulation performance; if receiver conversion time is considered, $N_{Inter}$ represents is the number of subframes where PCCPCH and DwPCH signals reside, and the PCCPCH and DwPCH signals are received from the target inter-frequency TDD cell within the available inter-frequency measurement time determined by the TDD UE based on assured MBMS demodulation performance minus the receiver conversion time;

The receiver conversion time depends on the hardware capability of the receiver and is usually equal to $2 \times 0.5$ ms = I ms;

For other parameters, refer to the description of the formula 11 in the prior art.

The upper layer of the TDD UE applies the measurement result reported by the physical layer to an internal algorithm (for example, the measurement result may be used as an input parameter of the cell reselection algorithm) or reports the measurement result to the RNC.

According to the above determined measurement performance, a TDD UE receiving an MBMS PTM traffic identifies a new WCDMA FDD cell by the following procedure below:

The TDD UE receives system measurement control information from the UTRAN and retrieves the WCDMA FDD cell information indicated in the measurement control information to find the presence of an unidentified WCDMA FDD cell.

The TDDUE detects the unidentified WCDMA FDD cell.

The TDD UE performs inter-RAT cell measurement within part of the time it selects from the idle time and/or the inter-frequency measurement time computed from the formula 1 according to the prior art to identify the new inter-RAT cell.

The TDD UE finishes identifying the new inter-RAT WCDMA FDD cell within the time obtained from the formula below:
If a TDD UE receiving an MBMS PTM traffic is to identify a new inter-RAT WCDMA FDD cell in the monitor set, the required identification time $T_{identify\ FDD\ inter}$ is as follows:

For a 3.84Mcps TDD UE to identify a new inter-RAT WCDMA FDD cell in the monitor set, the required $T_{identify\ FDD\ inter}$ satisfies the following formula:

$$T_{identify\ FDD\ inter} = Max\left\{5000, Ceil\left\{\frac{T_{basic\_identify\_FDD\ inter}}{T_{Inter}}\right\} \cdot T_{meas} \cdot N_{Freq.FDD}\right\}$$ (27)

where:

$T_{Inter}$ represents the available inter-frequency measurement time determined by the TDD UE based on assured MBMS demodulation performance; if receiver conversion time is considered, $T_{Inter}$ represents the available inter-frequency measurement time determined by the TDD UE based on assured MBMS demodulation performance minus the receiver conversion time;

The receiver conversion time depends on the hardware capability of the receiver and is usually equal to $2 \times 0.5$ ms = 1 ms;

For other parameters, refer to the description of the formula 12 in the prior art.

For a 1.28Mcps TDD UE to identify a new inter-RAT WCDMA FDD cell in the monitor set, the required $T_{identify\_FDD\ inter}$ satisfies the following formula:

$$T_{identify\_FDD\ inter} = Max\left\{5000, T_{basic\ identify\ FDD\ inter} \cdot \frac{T_{Measurement\_Period\ FDD\ inter}}{T_{Inter}} \cdot N_{Freq}\right\} ms$$ (28)

where:

$T_{Inter}$ represents the available inter-frequency measurement time determined by the TDD UE based on assured MBMS demodulation performance; if receiver conversion time is considered, $T_{Inter}$ represents the available inter-frequency measurement time determined by the TDD UE based on assured MBMS demodulation performance minus the receiver conversion time;

The receiver conversion time depends on the hardware capability of the receiver and is usually equal to $2 \times 0.5$ ms = 1 ms;

For other parameters, refer to related description of the formula 13 in the prior art.

The TDD UE marks the newly identified inter-RAT WCDMA FDD cell as an identified cell in the cell liststored by itself.

A TDD UE receiving an MBMS traffic measures the CPICH of inter-RAT WCDMA FDD cells and reports the measurement result by the following procedure below:

The TDD UE receives system measurement control information or system broadcast information from the UTRAN and triggers the CPICH measurement of inter-RAT WCDMA FDD cells.

The TDD UE measures the CPICH of inter-RAT WCDMA FDD cells within part of the time it selects from the idle time and/or the measurement time computed from the formula 1 according to the prior art.

The physical layer of the TDD UE reports the CPICH measurement result to the upper layer within the $T_{Measurement\ FDD,\ Inter}$ obtained from the formula below:

For a 3.84Mcps TDD UE, the required $T_{Measurement\ FDD\ inter}$ satisfies the following formula:

$$T_{measurement\ FDD\ inter} = Max\left\{ T_{measurement\ period\ FDD\ inter}, 2\cdot T_{meas}, Ceil\left\{\frac{T_{basic\_measurement\_FDD\ inter}}{T_{Inter}}\right\}\cdot T_{meas}\cdot N_{Freq.FDD} \right\} \qquad (29)$$

where:

$T_{Inter}$ represents the available inter-frequency measurement time determined by the TDD UE based on assured MBMS demodulation performance; if receiver conversion time is considered, $T_{Inter}$ represents the available inter-frequency measurement time determined by the TDD UE based on assured MBMS demodulation performance minus the receiver conversion time;

The receiver conversion time depends on the hardware capability of the receiver and is usually equal to $2 \times 0.5$ ms = 1 ms;

For other parameters, refer to the related description of the formula 14 in the prior art.

For a 1.28Mcps TDD UE, the required $T_{Measurement—FDD\ inter}$ satisfies the following formula:

$$T_{measurement\_FDD\ inter} = Max\left\{ T_{Measurement\_Period\ FDD\ inter}, T_{basic\_measurement\_FDD\ inter}\cdot\frac{T_{Measuremen\_Period\_FDD\ inter}}{T_{Inter}}\cdot N_{Freq} \right\}ms \qquad (30)$$

where:

$T_{Inter}$ represents the available inter-frequency measurement time determined by the TDD UE based on assured MBMS demodulation performance; if receiver conversion time is considered, $T_{Inter}$ represents the available inter-frequency measurement time determined by the TDD UE based on assured MBMS demodulation performance minus the receiver conversion time;

The receiver conversion time depends on the hardware capability of the receiver and is usually equal to $2 \times 0.5$ ms = 1 ms;

For other parameters, refer to the related description of the formula 15 in the prior art.

The upper layer of the TDD UE applies the measurement result reported from the physical layer to an internal algorithm (for example, the measurement result may be used as an input parameter of the cell reselection algorithm) or reports the measurement result to the RNC.

According to another embodiment of the invention, the method for determining required measurement performance is also applicable when a TDD UE receiving MBMS information measures intra-frequency cells. In this case, the UE determines the required measurement performance by taking into consideration the demodulation performance for MBMS information (for example MBMS PTM traffic or MCCH information), thus assuring that the UE finishes identifying a new cell or reporting the measurement result to the upper layer within the time required by the measurement performance based on assured MBMS demodulation performance.

A 1.28Mcps TDD UE may finish identifying a new intra-frequency cell within $T_{identify\ intra}$ as below:

$$T_{identify\ intra} = T_{basic\ identify\ TDD, intra} \cdot \frac{N_{Period, Intra}}{N_{Intra}} \quad (31)$$

where:

$N_{period,\ intra} = 40$ ms;
$N_{intra}$ represents the number of subframes where PCCPCH and DwPCH signals of the target intra-frequency TDD cell reside that are received within the available intra-frequency measurement time determined by the UE based on assured MBMS demodulation performance.

A 1.28Mcps TDD UE reports the intra-frequency measurement result to the upper layer at regular intervals of 200 ms, but the number of cells for PCCPCH measurement report is as follows:

$$Y_{measurement\ intra} = Floor\left\{ X_{basic\ measurement\ TDD} \cdot \frac{N_{Intra}}{N_{Period, Intra}} \right\} \quad (32)$$

For the parameters in the formula, refer to the previous descriptions.
Based on the above determined measurement performance, a TDD UE receiving an MBMS PTM traffic measures GSM cells by the following procedure below:

The TDD UE receives system measurement control information from the UTRAN and retrieves the GSM cell information indicated in the measurement control information to find that an unidentified GSM cell is present or that the received signal of an identified inter-RAT GSM cell needs to be measured.

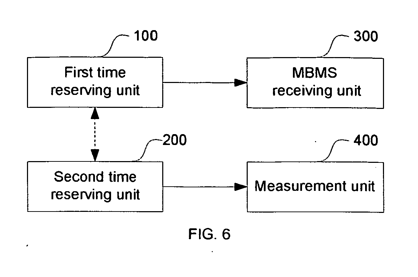

The TDD UE detects the unidentified inter-RAT GSM cell or measures the received signal of the identified inter-RAT GSM cell.
The TDD UE measures inter-RAT GSM cells to identify the unidentified GSM cell detected in the above-described step or measures the received signal of the identified inter-RAT GSM cell within part of the time it selects from the idle time and/or the measurement time obtained from the formula 1 according to the prior art. The selected time is specifically the available inter-frequency measurement time determined by the UE based on assured MBMS demodulation performance. If there is a receiver conversion process, the time is the available inter-frequency measurement time determined by the UE based on assured MBMS demodulation performance minus the receiver conversion time; the conversion time depends on the hardware capability of the receiver and is usually equal to 1 ms.
The TDD UE marks the newly identified inter-RAT GSM cell as identified in the cell list stored by itself or reports the measured receiving signal quality of the identified inter-RAT GSM cell.
This procedure is also applicable when a TDD UE receiving an MBMS PTM traffic measures the RSSI, or identifies the BSIC, or revalidates the BSIC of a GSM cell.
Likewise, this method is also applicable to the group voice call or voice broadcast service in a GSM communications system.
Corresponding to the method for inter-frequency/inter-RAT measurement, a user equipment is also provided by an embodiment of the invention. Figure 6 is a diagram showing the structure of a UE according to an embodiment of the invention. As shown in Figure6, a UE includes a first time reserving unit 100, a second time reserving unit 200, an MBMS receiving unit 300 and a measurement unit 400. The function of each unit is as follows:

The first time reserving unit 100 reserves a first time for receiving an MBMS traffic from the system required inter-frequency/inter-RAT measurement time;
The second time reserving unit 200 reserves a second time for inter-frequency/inter-RAT measurement from the system required inter-frequency/inter-RAT measurement time;
The MBMS receiving unit 300 receives an MBMS traffic during the first time reserved by the first time reserving unit 100;
The measurement unit 400 performs inter-frequency/inter-RAT measurement during the second time reserved by the second time reserving unit 200.

According to another embodiment of the invention, the UE includes a measurement performance determining unit, which determines the required measurement performance in the process of receiving the MBMS traffic to assure the demodulation performance for the received MBMS traffic. Optimally, the required measurement performance includes:

required time for the UE to identify a new cell; and/or
required time for the physical layer of the UE to report the cell measurement result to the upper layer.

The technical implementation details of the UE are already described in the description of the methods provided by embodiments of the invention.

Although the invention has been illustrated and described with reference to some preferred embodiments, the invention is not limited to these. Those skilled in the art may make various variations and modifications without departing from the scope of the invention. The invention is intended to cover these modifications and variations provided that they fall into the scope of protection defined by the following claims.

**Claims**

1. A method for inter-frequency/inter-RAT measurement in a 3rd generation mobile communications system, **characterized by** comprising:

reserving a first time for receiving a multimedia broadcast/multicast service, MBMS, traffic;
reserving a second time for an inter-frequency/inter-RAT measurement, and the first time and the second time being reserved from a system required inter-frequency/inter-RAT measurement time by a user equipment, UE;
receiving the MBMS traffic in the first time reserved; and
performing the inter-frequency/inter-RAT measurement in the second time reserved.

2. The method of claim 1, wherein the UE is a TDD UE.

3. The method of claim 2, wherein the system required inter-frequency/inter-RAT measurement time comprises:

an idle time; and/or
a measurement time determined by the following formula when the TDD UE is in a CELL_FACH state:

$$SFN = (C\_RNTI \bmod M\_REP + n \times M\_REP) \times N$$

in which, the TDD UE performs the inter-frequency/inter-RAT measurement in SFNs that satisfy the formula;
N represents a value obtained using 10 ms to divide the transmission timing interval, TTI, of a forward access channel, FACH, that has a maximum TTI, and the FACH is on a secondary common control physical channel, SCCPCH, that bears non-MBMS logical channels monitored by the TDD UE ;
$M\_REP = 2^k$, in which M_REP represents a cycle of a measurement interval; the cycle for the measurement time of an N-frame is $N \times M\_REP$ frames; k represents a FACH measurement interval cycle coefficient, which may be retrieved from an information element "FACH measurement occasion info" in system information 11 or 12;
C_RNTI represents a cell radio network temporary identity of the TDD UE;
n = 0, 1, 2 ..., as long as SFN is below its maximum value.

4. The method of claim 1, wherein the UE is an FDD UE.

5. The method of claim 4, wherein the system required inter-frequency/inter-RAT measurement time is determined by the following formula when the FDD UE is in a CELL_FACH state:

$$SFN = (C\_RNTI \bmod M\_REP + n \times M\_REP) \times N$$

in which, the FDD UE performs the inter-frequency/inter-RAT measurement in SFNs that satisfy the formula;
N represents a value obtained using 10 ms to divide a transmission timing interval, TTI, of a forward access channel, FACH, that has a maximum TTI, and the FACH is on a secondary common control physical channel, SCCPCH, that bears non-MBMS logical channels monitored by the FDD UE;
M_REP = $2^k$, in which M_REP represents a cycle of a measurement interval; the cycle for the measurement time of an N-frame is N×M_REP frames; k represents a FACH measurement interval cycle coefficient, which may be retrieved from an information element "FACH measurement occasion info" in system information 11 or 12;
C_RNTI represents a cell radio network temporary identity of the FDD UE;
n = 0, 1, 2 ..., as long as SFN is below its maximum value.

6. The method of any of claim 1 to claim 5, wherein the MBMS comprises:

   MBMS point to point, PTP, traffic information; and/or
   MBMS PTP control information; and/or
   MBMS point to multipoint, PTM, traffic information; and/or
   MBMS PTM control information.

7. The method of claim 1, further comprising: selecting a cell of better quality as serving cell based on a measurement result.

8. A user equipment in a 3rd generation mobile communications system, **characterized in that** the user equipment comprises:

   a first time reserving unit (100), for reserving a first time for receiving an MBMS traffic from a system required inter-frequency/inter-RAT measurement time;
   a second time reserving unit (200), for reserving a second time for inter-frequency/inter-RAT measurement from the system required inter-frequency/inter-RAT measurement time;
   an MBMS receiving unit (300), for receiving the MBMS traffic during the first time reserved by the first time reserving unit (100);
   a measurement unit (400), for performing inter-frequency/inter-RAT measurement during the second time reserved by the second time reserving unit (200).

**Patentansprüche**

1. Verfahren zur Messung zwischen Frequenzen/zwischen RAT in einem Mobilkommunikationssystem der dritten Generation, **gekennzeichnet dadurch, dass** es die folgenden Schritte umfasst:

   Reservieren einer ersten Zeit zum Empfangen eines Verkehrs des Multimedia Broadcast/Multicast Service MBMS;
   Reservieren einer zweiten Zeit für eine Messung zwischen Frequenzen/zwischen RAT, wobei die erste Zeit und die zweite Zeit von einer systemerforderlichen Zeit der Messung zwischen Frequenzen/zwischen RAT durch ein Benutzergerät UE reserviert werden;
   Empfangen des MBMS-Verkehrs in der ersten reservierten Zeit; und
   Durchführen der Messung zwischen Frequenzen/zwischen RAT in der zweiten reservierten Zeit.

2. Verfahren nach Anspruch 1, wobei das UE ein TDD UE ist.

3. Verfahren nach Anspruch 2, wobei die systemerforderliche Zeit der Messung zwischen Frequenzen/zwischen RAT Folgendes umfasst:

   eine Leerlaufzeit; und/oder
   eine Messzeit, die durch die folgende Formel bestimmt wird, wenn sich das TDD UE in einem CELL_FACH-Zustand befindet:

$$SFN = (C\_RNTI \bmod M\_REP + n \times M\_REP) \times N,$$

wobei das TDD UE die Messung zwischen Frequenzen/zwischen RAT in SFN durchführt, die der Formel genügen;

N einen Wert repräsentiert, der unter Verwendung von 10 ms zum Aufteilen des Übertragungstimingintervalls TTI eines Vorwärtszugangskanals FACH, der ein maximales TTI aufweist, erhalten wird, und sich der FACH auf einem sekundären physischen Zentralsteuerungskanal SCCPCH befindet, der durch das TDD UE überwachte logische Nicht-MBMS-Kanäle trägt;

$M\_REP = 2^k$ ist, wobei M_REP einen Zyklus eines Messintervalls repräsentiert; der Zyklus für die Messzeit eines N-Rahmens $N \times M\_REP$ Rahmen beträgt; k einen FACH-Messintervall-Zykluskoeffizienten repräsentiert, der aus einem Informationselement "FACH measurement occasion info" in den Systeminformationen 11 oder 12 abgerufen werden kann;

C_RNTI eine Zellen-Funknetztemporäridentität des TDD UE repräsentiert; und

n = 0, 1, 2 ..., ist, solange SFN unter seinem Maximalwert liegt.

4. Verfahren nach Anspruch 1, wobei das UE ein FDD UE ist.

5. Verfahren nach Anspruch 4, wobei die systemerforderliche Zeit der Messung zwischen Frequenzen/zwischen RAT durch die folgende Formel bestimmt wird, wenn sich das FDD UE in einem CELL_FACH-Zustand befindet:

$$SFN = (C\_RNTI \bmod M\_REP + n \times M\_REP) \times N,$$

wobei das FDD UE die Messung zwischen Frequenzen/zwischen RAT in SFN durchführt, die der Formel genügen;

N einen Wert repräsentiert, der unter Verwendung von 10 ms zum Aufteilen des Übertragungstimingintervalls TTI eines Vorwärtszugangskanals FACH, der ein maximales TTI aufweist, erhalten wird, und sich der FACH auf einem sekundären physischen Zentralsteuerungskanal SCCPCH befindet, der durch das FDD UE überwachte logische Nicht-MBMS-Kanäle trägt;

$M\_REP = 2^k$ ist, wobei M_REP einen Zyklus eines Messintervalls repräsentiert; der Zyklus für die Messzeit eines N-Rahmens $N \times M\_REP$ Rahmen beträgt; k einen FACH-Messintervall-Zykluskoeffizienten repräsentiert, der aus einem Informationselement "FACH measurement occasion info" in den Systeminformationen 11 oder 12 abgerufen werden kann;

C_RNTI eine Zellen-Funknetztemporäridentität des FDD UE repräsentiert; und

n = 0, 1, 2 ..., ist, solange SFN unter seinem Maximalwert liegt.

6. Verfahren nach einem der Ansprüche 1 bis 5, wobei der MBMS Folgendes umfasst:

MBMS-Punkt-zu-Punkt- bzw. -PTP-Verkehrsinformationen; und/oder
MBMS-PTP-Steuerinformationen; und/oder
MBMS-Punkt-zu-Mehrpunkt- bzw. -PTM-Verkehrsinformationen; und/oder
MBMS-PTM-Steuerinformationen.

7. Verfahren nach Anspruch 1, ferner mit dem folgenden Schritt:

Auswählen einer Zelle besserer Qualität als versorgende Zelle auf der Basis eines Messergebnisses.

8. Benutzergerät in einem Mobilkommunikationssystem der dritten Generation, **dadurch gekennzeichnet, dass** das Benutzergerät Folgendes umfasst:

eine erste Zeitreserviereinheit (100) zum Reservieren einer ersten Zeit zum Empfangen eines MBMS-Verkehrs von einer systemerforderlichen Zeit der Messung zwischen Frequenzen/zwischen RAT;
eine zweite Zeitreserviereinheit (200) zum Reservieren einer zweiten Zeit für Messung zwischen Frequenzen/zwischen RAT von der systemerforderlichen Zeit der Messung zwischen Frequenzen/zwischen RAT;
eine MBMS-Empfangseinheit (300) zum Empfangen des MBMS-Verkehrs während der durch die erste Zeitreserviereinheit (100) reservierten ersten Zeit;
eine Messeinheit (400) zum Durchführen der Messung zwischen Frequenzen/zwischen RAT während der durch die zweite Zeitreserviereinheit (200) reservierten zweiten Zeit.

**Revendications**

1. Procédé de mesure inter-fréquence/inter-RAT dan un système de communications mobiles de troisième génération, **caractérisé en ce qu'**il comprend :

   la réservation d'un premier temps pour recevoir un trafic de service de diffusion multimédia/multidiffusion, MBMS ;
   la réservation d'un second temps pour une mesure inter-fréquence/inter-RAT, le premier temps et le second temps étant réservés à partir d'un temps de mesure inter-fréquence/inter-RAT requis par le système par un équipement utilisateur, UE ;
   la réception du trafic MBMS dans le premier temps réservé ; et
   l'exécution de la mesure inter-fréquence/inter-RAT dans le second temps réservé.

2. Procédé selon la revendication 1, dans lequel l'UE est un UE TDD.

3. Procédé selon la revendication 2, dans lequel le temps de mesure inter-fréquence/inter-RAT requis par le système comprend :

   un temps inactif ; et/ou
   un temps de mesure déterminé par la formule suivante quand l'UE TDD est dans un état CELL_FACH :

$$SFN = (C\_RNTI \bmod M\_REP + n \times M\_REP) \times N$$

   où l'UE TDD effectue la mesure inter-fréquence/inter-RAT dans les SFN qui satisfont la formule ;
   N représente une valeur obtenue en utilisant 10 ms pour diviser l'intervalle de synchronisation de transmission, TTI, d'un canal d'accès aller, FACH, qui a un TTI maximum, et le FACH se trouve sur un canal physique de commande commun secondaire, SCCPCH, qui porte des canaux logiques non MBMS surveillés par l'UE TDD ;
   $M\_REP = 2^k$, où M_REP représente un cycle d'un intervalle de mesure ; le cycle du temps de mesure d'une trame N est $N \times M\_REP$ trames ; k représente un coefficient de cycle d'intervalle de mesure FACH, qui peut être recouvré à partir d'un élément d'information "info d'occasion de mesure FACH" dans les informations de système 11 on 12 ;
   C_RNTI représente une identité temporaire de réseau radio cellulaire de l'UE TDD ;
   n = 0, 1,2,..., tant que SFN est en dessous de sa valeur maximum.

4. Procédé selon la revendication 1, dans lequel l'UE est un UE FDD.

5. Procédé selon la revendication 4, dans lequel le temps de mesure inter-fréquence/inter-RAT requis par le système est déterminé par la formule suivante quand l'UE FDD est dans un état CELL_FACH:

$$SFN = (C\_RNTI \bmod M\_REP + n \times M\_REP) \times N$$

   où l'UE FDD effectue la mesure inter-fréquence/inter-RAT dans les SFN qui satisfont la formule ;
   N représente une valeur obtenue en utilisant 10 ms pour diviser l'intervalle de synchronisation de transmission, TTI, d'un canal d'accès aller, FACH, qui a un TTI maximum, et le FACH se trouve sur un canal physique de commande commun secondaire, SCCPCH, qui porte des canaux logiques non MBMS surveillés par l'UE FDD ;
   $M\_REP = 2^k$, où M_REP représente un cycle d'un intervalle de mesure ; le cycle du temps de mesure d'une trame N est $N \times M\_REP$ trames ; k représente un coefficient de cycle d'intervalle de mesure FACH, qui peut être recouvré à partir d'un élément d'information "info d'occasion de mesure FACH" dans les informations de système 11 on 12 ;
   C_RNTI représente une identité temporaire de réseau radio cellulaire de l'UE FDD ;
   n = 0, 1,2,..., tant que SFN est en dessous de sa valeur maximum.

6. Procédé selon l'une quelconque des revendications 1 à 5, dans lequel le MBMS comprend :

   des informations de trafic MBMS point à point, PTP, et/ou
   des informations de commande MBMS PTP ; et/ou

des informations de trafic MBMS point-multipoint, PTM ; et/ou
des informations de commande MBMS PTM.

7. Procédé selon la revendication 1, comprenant en outre :

la sélection d'une cellule de meilleure qualité que la cellule de desserte en fonction d'un résultat de mesure.

8. Equipement utilisateur dans un système de communications mobiles de troisième génération, **caractérisé en ce que** l'équipement utilisateur comprend :

une unité de réservation d'un premier temps (100) pour réserver un premier temps de réception d'un trafic MBMS à partir d'un temps de mesure inter-fréquence/inter-RAT requis par le système ;
une unité de réservation d'un second temps (200) pour réserver un second temps de mesure inter-fréquence/inter-RAT à partir du temps de mesure inter-fréquence/inter-RAT requis par le système ;
une unité de réception MBMS (300) pour recevoir le trafic MBMS durant le premier temps réservé par l'unité de réservation de premier temps (100) ;
une unité de mesure (400) pour exécuter la mesure inter-fréquence/inter-RAT durant le second temps réservé par l'unité de réservation de second temps (200).

UE retrieves the inter-frequency cell information indicated in the system measurement control information from the UTRAN and finds an unidentified inter-frequency cell. —— 10

UE detects the unidentified inter-frequency cell. —— 11

UE performs inter-frequency measurement in SFNs that satisfy SFN = (C_RNTI mod M_ REO + N x M_REP) x N to identify the unidentified inter-frequency cell. —— 12

UE identifies the unidentified inter-frequency cell within the time computed

$$T_{identify,inter} = Ceil\{ \frac{T_{basic\_identify\_FDD,inter}}{T_{inter}} \} \cdot T_{meas} \cdot N_{freq,FDD}$$

—— 13

UE marks the newly identified inter-frequency cell as an identified cell in the cell list it stores —— 14

FIG. 1

UE receives measurement control information or system broadcast information from the UTRAN and triggers CPICH measurement for inter-frequency cells. —— 20

UE performs inter-frequency CPICH measurement in SFNs that satisfy SFN = (C_RNTI mod M_ REO + N x M_REP) x N. —— 21

The physical layer of UE reports CPICH measurement result to the upper layer within the measurement time obtained from formula 8. —— 22

The upper layer of UE applies the CPICH measurement result reported by the physical layer to an internal algorithm or reports the result to RNC. —— 23

FIG. 2

UE retrieves the inter-frequency cell information indicated in the measurement control information from the UTRAN and finds an unidentified inter-system WCDMA TDD cell. — 30

UE detects the unidentified inter-system WCDMA TDD cell — 31

UE performs inter-system measurement in SFNs that satisfy SFN = (C_RNTI mod M_ REO + N x M_REP) x N to identify the unidentified inter-system WCDMA TDD cell — 32

UE identifies the unidentified inter-system WCDMA TDD cell within the time computed from formula 9 — 33

UE marks the newly identified inter-system WCDMA TDD cell as an identified cell in the cell list it stores — 34

FIG. 3

UE receives measurement control information or system broadcast information from the UTRAN and triggers PCCPCH RSCP measurement for inter-system WCDMA TDD cells.  — 40

UE measures PCCPCH RSCP of inter-system WCDMA TDD cells in SFNs that satisfy SFN = (C_RNTI mod M_ REO + N x M_REP) x N.  — 41

The physical layer of UE reports PCCPCH RSCP measurement result to the upper layer within the measurement time obtained from formula 10.  — 42

The upper layer of UE applies the PCCPC RSCP measurement result reported by the physical layer to an internal algorithm or reports the result to RNC.  — 43

FIG. 4

UE retrieves the inter-system cell information indicated in the measurement control information from the UTRAN and finds that an unidentified inter-system GSM cell is present or that an identified inter-system GSM cell needs to be measured.  — 50

UE detects the unidentified inter-system GSM cell or measures the identified inter-system GSM cell  — 51

UE measures inter-system GSM cells in SFNs that satisfy SFN = (C_ RNTI mod M_ REP + n x M REP) x N to identify the unidentified inter-system GSM cell detected or measures the unidentified inter-system GSM cell within the available inter-frequency measurement time determined based on assured MBMS demodulation performance.  — 52

UE marks the newly identified inter-system GSM cell as an identified cell in the cell list it stores or reports the measurement result of the identified inter-system GSM cell.  — 53

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1478198 A1

**Non-patent literature cited in the description**

- Universal Mobile Telecommunications System (UMTS); Radio Resource Control (RRC) protocol specification (3GPP TS 25.331 version 6.4.0 Release 6); ETSI TS 125 331. *ETSI STANDARDS, EUROPEAN TELECOMMUNICATIONS STANDARDS INSTITUTE,* December 2004, vol. 3-R2 (V640), ISSN 000-0001